# EUROPÄISCHE PATENTSCHRIFT

(11) **EP 1 500 578 B1**
(45) Veröffentlichungstag und Bekanntmachung des Hinweises auf die Patenterteilung: **15.07.2009**
(21) Anmeldenummer: 04011684.0
(22) Anmeldetag: 17.05.2004
(51) Int. Cl.: B62D 25/08, B62D 29/00, B29C 70/34, B29C 70/40

(54) **Modulträger-Teil und Verfahren zu seiner Pressformung**
Module support and method for its compression moulding
Module de support et procédé pour son moulage par compression

(30) Priorität: 21.07.2003 DE 10332969
(43) Veröffentlichungstag der Anmeldung: 26.01.2005
(73) Patentinhaber: ISE Automotive GmbH, 51702 Bergneustadt (DE)
(72) Erfinder: Müller, Hartwig, Dr.-Ing., 09126 Chemnitz (DE)
(74) Vertreter: Grünecker, Kinkeldey, Stockmair & Schwanhäusser Anwaltssozietät

(56) Entgegenhaltungen:
- EP-A- 1 048 554
- EP-A- 1 101 689
- EP-A- 1 291 266
- WO-A-02/102646
- DE-A- 19 527 197
- FR-A- 2 803 261
- US-A- 5 817 269
- US-A1- 2002 053 400

## Beschreibung

Die Erfindung betrifft einen Modulträger-Teil gemäß dem Anspruch 1 und ein Verfahren zum Pressformen des Modulträger-Teils gemäß dem Anspruch 8.

Im Fahrzeugbau findet Kunststoff bzw. Faserverbundkunststoff zunehmende Verwendung, auch zum Ausbilden tragender Strukturen des Fahrzeugkörpers. Beispiele hierfür sind sogenannte Frontendmodulträger, Rückwandmodulträger, Seitenwandmodulträger, Bodenmodulträger, Überrollbügel-Modulträger, und dgl., die entweder zur Gänze aus Faserverbundkunststoff oder in Mischbauweise aus Faserverbundkunststoff und Metall hergestellt und in den Fahrzeugkörper integriert werden, und bestimmte Belastungsanforderungen an die Steifigkeit des Fahrzeugkörpers und bei einem Unfall erfüllen sollen. Ein Frontendmodulträger eines PKW-Fahrzeugkörpers ist üblicherweise rahmenartig und in Mischbauweise konzipiert, kann in einem Unterteil den Stoßfänger mit sogenannten Crash-Boxen zum Anschluss an Fahrzeugkörperlängsträger, Seitenwangen und in einem Oberteil einen Hauptträger mit nach unten greifenden Stegen umfassen, an denen Module wie Kühlerteile, Scheinwerfer, Distanzsensoren, Beschläge und dgl. Montiert werden. Die Anforderungen an den Gestaltfestigkeit des Frontend-Modulträgers sind deswegen hoch, weil bei einem Unfall bestimmte Module funktionsfähig bleiben müssen und ein bestimmtes Verformungsverhalten im Frontbereich vorgeschrieben ist.

Aus der Praxis ist für nur moderate Steifigkeitsanforderungen ein Frontendmodulträger bekannt, der einen Hauptträger mit davon nach unten strebenden Stegen aus mit Langfasern verstärktem Faserverbundkunststoff enthält. Vorgeschriebene Montagebereiche sind hierbei problemlos einzuformen, weil mit Langfasern verstärkter Kunststoff entweder in Mattenform oder als Spritzgussformteil einfach zu verformen ist. Jedoch genügt die materialbedingte Steifigkeit des Hauptträgers mit den Stegen hohen Anforderungen nicht in ausreichendem Maße. Werden hohe Anforderungen an die Steifigkeit gestellt, dann wird in der Praxis für den Hauptträger eine Mischbauweise angewandt, indem der langfaserverstärkte Faserverbundkunststoff-Hauptträger durch Stahlverstärkungen armiert wird. Dies ist eine arbeitsintensive und teure Vorgangsweise und macht den unschätzbaren Gewichtsvorteil des Faserbundkunststoffs zumindest teilweise wieder zunichte.

Ferner ist aus der Praxis ein Frontendmodulträger bekannt, der einen Hauptträger aus Endlosfasergewebeschichten umfasst, jedoch ohne tragfähige Stege. Die Stege lassen sich bisher unter Verwendung von Endlosfaser-Gewebeschichten nämlich nicht rationell und effektiv in den Hauptträger eingliedern.

Bei einem aus EP-A-1 048 554 bekannten Frontend-Modul für eine Fahrzeugkarosserie ist ein rahmenförmiger Montageträger, gemäß dem Oberbegriff des Anspruchs 1, aus Kunststoff vorgesehen, in welchen der mit Befestigungsstegen ausgebildeter Hauptträger einstückig eingeformt ist. Der Montageträger ist dabei aus einem glasfaserverstärkten oder glasmattenverstärkten Kunststoff gefertigt. EP-A-1 048 554 offenbart weiter ein Verfahren gemäß dem Oberbegriff des Anspruchs 8.

Das aus EP-A-1 101 689 bekannte Frontend-Modul ist aus einem oberen Querträger und einem unteren Querträger sowie dazwischen angeordneten Stützteilen zusammengesetzt. Der obere Querträger besteht aus Leichtmetall und ist mit Fasermaterial verstärkt. Die Stützteile bestehen aus Kunststoffmaterial und sind verrippt. Der untere Querträger ist entsprechend dem Lastenheft zur Aufprallabdämpfung gewählt und enthält energieabsorbierende Kästen.

Ein aus EP-A-1 291 266 A bekannter Hybridträger für ein Kraftfahrzeug weist einem als Blechbiegeteil ausgebildeten Grundkörper auf, an den weitere Teile aus unterschiedlichen Kunststoffarten angespritzt sind.

Ein aus FR-A-2 803 261 A bekanntes Frontend-Modul für ein Kraftfahrzeug weist einen oberen und einen unteren Querträger aus Kunststoffmaterial auf, die einstückig durch vertikale Streben miteinander verbunden sind. In das Kunststoffmaterial sind lokale Verstärkungen eingebettet, die aus einem faserverstärkten Kunststoffmaterial bestehen. Diese Verstärkungen können gehäuseartig oder kabelartig ausgebildet und in Hohlräume des Kunststoffkörpers eingesetzt oder direkt in den Kunststoffkörper eingebettet sein.

Ein aus WO 02/102646-A bekanntes strukturelles Glied für einen Fahrzeugkörper besteht aus geformtem Kunststoff und kann Kurzfasern oder Langfasern enthalten. Das strukturelle Glied wird durch ein aufgesetztes metallisches Verstärkungsglied ausgesteift, das an das strukturelle Glied aufgeklebt ist und ein Körper ist.

Aus DE-A-195 27 197 sind Werkstücke aus Faserverbundmaterial bekannt, deren jedes aus mehren einstückig verbundenen Streben besteht. Zumindest eine einzige lange Faser, bzw. wenige lange Fasern sind derart über alle Streben durchlaufend angeordnet, dass jede Strebe von mehreren etwa parallelen Abschnitten derselben Faser in Längsrichtung durchsetzt wird.

Aus US-A-5 817 269 A ist ein Verfahren zum Herstellen von Faserverbundkunststoff-Bauteilen beispielsweise für Luftfahrzeuge bekannt. Verfahrensgemäß werden Fasern und eine Kunststoffmatrix enthaltende Prepregs verarbeitet. Zur Herstellung eines Doppel-T-Trägers in einem solchen Bauteil werden die beiden Querstege des Trägers aus mehreren Prepreglagen zusammengesetzt, die flächig miteinander verbunden sind. Der Mittelsteg des Trägers wird aus zwei weiteren Prepreglagen gebildet, die an den Querstegen umgeschlagen und angehaftet sind.

Aus US 2002/0053400 A1 ist ein Verfahren zum Herstellen von rohrförmigen Faserverbundkunststoff-Halbfertigprodukten bekannt, bei den Lagen aus trockenen Fasergeweben mit abwechselnd dazwischen platzierten Lagen aus einem Polymer kombiniert werden. Die Lagen werden dann gepresst und ausgehärtet. Die dazwischen gelegten Polymerlagen weisen lokale Vertiefungen auf, um Scherspannungen dann zu minimieren, wenn als Endprodukte individuelle Profilteile hergestellt werden.

Der Erfindung liegt die Aufgabe zugrunde, einen Faserverbundkunststoff-Modulträger-Teil der eingangs genannten Art und ein Verfahren zu seiner Pressformung anzugeben, der trotz effektiver und rationeller Fertigung hohe Steifigkeitsanforderungen erfüllt.

Die gestellte Aufgabe wird hinsichtlich des Modulträger-Teils mit den Merkmalen des Anspruchs 1 und bezüglich des Verfahrens mit den Merkmalen des Anspruchs 8 gelöst.

Der die Endlosfasergewebeschichten enthaltende Hauptträger erfüllt problemlos auch höchste Steifigkeitsanforderungen. Da die aus der Hauptträgerbreitseite innerhalb der Hauptträgerbreitseitenränder unter einem spitzen Verschneidungswinkel abzweigenden Stege ebenfalls zumindest eine Endlosfasergewebeschicht enthalten, die über den Abzweiganschluss bis in den Hauptträger geführt und dort strukturell verankert ist, erfüllen auch die Stege höchste Steifigkeitsanforderungen und wird der einstückige Faserverbundkunststoff-Modulträger-Teil aus dem Hauptträger und den Stegen insgesamt zu einem statisch sehr tragfähigem Gebilde. Jeder Steg wirkt sozusagen wie aus dem Hauptträger gewachsen.

Verfahrenstechnisch wird das sich mit Endlosfaser-Gewebeschichten ergebende Problem, dass kein nennenswerter Materialanteil durch Fließen zu entfernteren Bereiche gezwungen werden kann, dadurch gelöst, dass die Endlosfaser-Gewebeschichten bereits vor dem Pressvorgang dort platziert werden, wo sie später gebraucht werden, so dass beim eigentlichen Pressvorgang, wenn überhaupt, nur geringfügige Anteile durch Fließen verlagert zu werden brauchen. Der Pressvorgang dient durch die vorher kontrollierte Platzierung der Endlosfaser-Gewebeschichten hauptsächlich der Formgebung, Verdichtung und Integration der Endlosfaser-Gewebeschichten des Stegs in die Endlosfaser-Gewebeschichten des Hauptträgers.

Langfaserverstärkter Faserverbundkunststoff (Glasfaserabschnitte in Längen von beispielsweise 10 bis 30 mm) bietet gegenüber Endlosfaser-Gewebe-Faserverbund kunststoff den Vorteil leichterer Verformbarkeit auch im Falle aufwendiger Formvielfalt. Deshalb wird bei einer zweckmäßigen Ausführungsform der Hauptträger mit dem wenigstens einen Steg in Faserverbundkunststoff-Hybrikdtechnik pressgeformt. Zumindest an einem Teil wenigstens einer Hauptträgerbreitseite und/oder wenigstens einer Stegbreitseite, gegebenenfalls einschließlich des Abzweiganschlusses wird stoffschlüssig mitgeformter Langfaser-Faserverbundkunststoff vorgesehen. Der langfaserverstärkte Verbundkunststoff lässt sich speziell zum Mitausformen auch komplizierter Montagebereiche für Module nutzen und/oder zum Abdecken der späteren Sichtseiten des Hauptträgers bzw. der Stege im Fahrzeug, letzteres wegen der optisch als zu technisch erkennbaren Struktur der Endlosfaser-Gewebeschichten. Der langfaserverstärkte Faserverbundkunststoff braucht allerdings keine nennenswerten statischen Funktionen in dem Modulträger-Teil zu erfüllen.

Bei einer bevorzugten Ausführungsform sind am Hauptträger und/oder an jedem Steg pressgeformte Montagebereiche vorgesehen, in denen im Fahrzeugkörper Module oder dgl. montiert werden. Um die Module sicher anbringen zu können, ist es wichtig, dass in den Montagebereichen ebenfalls Endlosfasem aus den Endlosfaser-Gewebeschichten vorliegen, allerdings in einer niedrigeren Konzentration als im Hauptträger und/oder in jedem Steg. Dadurch lassen sich die Montagebereiche stabiler gestalten als nur bei Verwendung von langfaserverstärktem Faserverbundkunststoff.

Bei einer weiteren, bevorzugten Ausführungsform kann am Hauptträger eine Lasche stoffschlüssig angebracht werden, die beispielsweise zur späteren Montage eines Kühlgebläses oder einer Scheinwerfereinheit benutzt wird. Diese Lasche enthält ebenfalls mindestens einen Endlosfaser-Gewebeschicht, um ausreichend zur Steifigkeit des Modulträgers und auch des Hauptträgers beizutragen und selbst sehr tragfähig zu sein. Jedoch erstreckt sich die Lasche nicht von der Hauptträgerbreitseite innerhalb der Hauptträgerbreitseitenränder quer vom Hauptträger weg, sondern um oder direkt am Randbereich, so dass die darin enthaltenen Endlosfasern auch quer über die in Längsrichtung im Hauptträger orientierten Endlosfasern verlaufen. Diese Lasche ist deshalb tragfähig mit dem Hauptträger verbunden, weil die darin enthaltene, mindestens eine Endlosfaser-Gewebeschicht von der Lasche bis in zumindest einen Teil der Hauptträgerbreitseite verläuft.

Um den Hauptträger mit seinen Stegen belastungsorientiert auszubilden, kann es zweckmäßig sein, im Hauptträger und/oder in jedem Steg zumindest bereichsweise mehr als eine Endlosfaser-Gewebeschicht zu verpressen, z.B. aus ggfs. schon mehrlagigen Prepregs.

Bei einer besonders zweckmäßigen Ausführungsform ist der Hauptträger mit integralen Stegen, und gegebenenfalls der Lasche, in einen rahmenartigen Mischbauweise-Frontend-Modulträger eines PKW eingebaut, und zwar als oberer Modulträgerteil. Der Hauptträger wird an beiden Enden über die Anschlussstellen mit Seitenwangen des Modulträgers verbunden, und über die Stege mit Crash-Box-Halterungen, die in einem Unterteil des Modulträgers vorgesehen sind. Die Crash-Boxen werden an Fahrzeuglängsträger angeschlossen. Der gesamte Modulträger, dessen Unterteil aus Metall bestehen kann, gestattet die bequeme Montage verschiedenartiger Module und ist durch den mit seinen Stegen integrierten Hauptträger außerordentlich belastbar und wird höchsten Belastungsanforderungen gerecht.

Um die Fließfähigkeit langfaserverstärkten Faserverbundkunststoffs und dessen optisch ansprechende Oberflächen nutzen zu können, wird verfahrensgemäß zusätzlich in den Formhohlraum für den Hauptträger und/oder in den Formhohlraum für den jeweiligen Steg wenigstens eine Matte mit Langfasern in einer Kunststoffmatrix platziert, und wird dieses Material beim Pressvorgang gezielt in bestimmte Bereiche der Formhohlräume gebracht, beispielsweise um Montagebereiche und/oder eine Abdeckung über die Breitseiten des Hauptträgers und der Stege zu formen. Der langfaserverstärkte Faserverbundkunststoff braucht in der Form nicht exakt an der späteren Einbaustelle platziert zu werden, weil er durch Fließen nahezu an alle beliebigen Stellen gebracht werden kann.

Alternativ kann langfaserverstärkter Faserverbundkunststoff auch nur in einen Formhohlraum eingebracht und dann unter dem Einfluss von Druck und Temperatur in einen anderen Formhohlraum an die dafür bestimmten Stellen verlagert werden.

Schließlich ist es auch möglich, den langfaserverstärkten Faserverbundkunststoff, der spritzfähig ist, in den bzw. die Endlosfaser-Gewebeschichten enthaltende Formhohlräume einzuspritzen und an die gewünschten Stellen zu zwingen.

Ausführungsformen des Erfindungsgegenstandes werden anhand der Zeichnung erläutert. Es zeigen:
- Fig. 1: eine schematische Perspektivansicht eines Frontend-Modulträgers für einen PKW,
- Fig. 2: eine schematische Schnittansicht einer ersten Ausführungsform eines mit einem Steg pressgeformten Hauptträgers als Modulträger-Teil, und
- Fig. 3: eine schematische Seitenansicht bzw. Schnittansicht einer anderen Ausführungsform eines Modulträger-Teils.

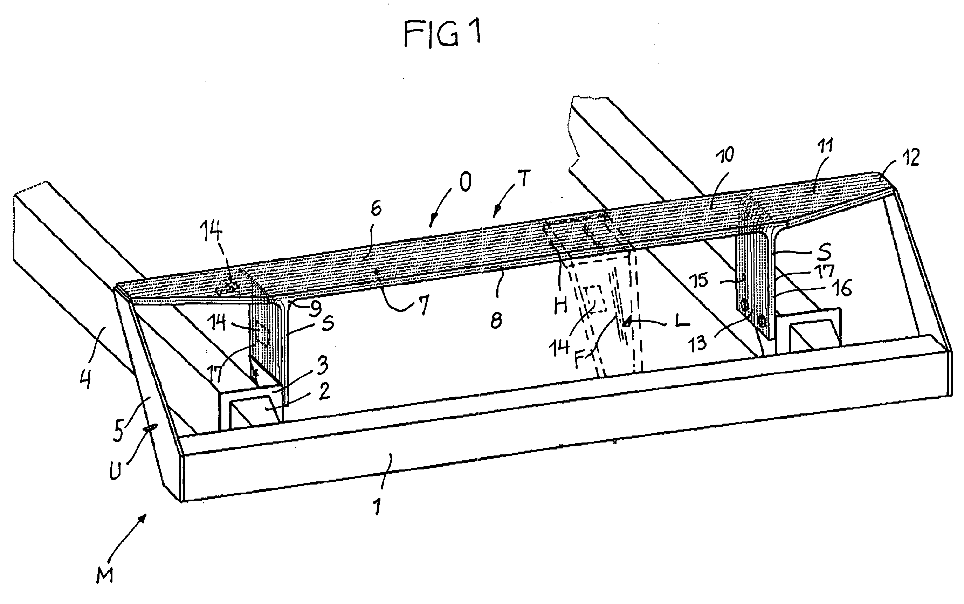

Ein in Fig. 1 schematisch angedeuteter Modulträger M ist beispielsweise ein Frontend-Modulträger für einen nicht gezeigten PKW-Fahrzeugkörper. Der Modulträger M ist zum Einbau im Stoßfänger- und Kühlerbereich vor dem Motor bestimmt, hat eine tragende Funktion im Fahrzeugkörper und ein vorbestimmtes Verformungsverhalten im Crash-Fall zu leisten. Femer dient der Modulträger M dazu, verschiedene Module funktionsgerecht zu montieren, wie Kühlerkomponenten, Scheinwerfer, Wam- und Distanzmessvorrichtungen, Beschläge und dgl. mehr.

Der in Fig. 1 gezeigte Modulträger ist in Mischbauweise erstellt, d.h. aus einem Unterteil U aus Metall/Leichtmetall und einem Oberteil O, der hier ein einstückiger Pressformteil aus Faserverbundkunststoff vorwiegend mit Endlosfaser-Gewebeschichten in einer Kunststoffmatrix ist. Es können verschiedene hochfeste Fasem verwendet werden, bevorzugt Glasfasern. Für die Kunststoffmatrix können verschiedene Kunststoffsorten benutzt werden, beispielsweise Polypropylen.

Der Unterteil U des Modulträgers M umfasst ein Querprofil 1, beispielsweise ein Leichtmetallstrangpressprofil, das zumindest Teil eines vorderen Stoßfängers sein kann, und schräg nach oben zurückweichende Seitenwangen 5, beispielsweise aus Stahlblech. Am Querprofil 1 sind deformierbare Crash-Boxen 2 hinterseitig angeordnet, die in Halterungen 3 abgestützt und mit Längsträgem 4 des Fahrzeugkörpers verbunden werden.

Der Oberteil O ist ein einstückiger Modulträger-Teil T und umfasst einen Hauptträger H, der hier mit bandartigem Querschnitt und langgestreckt angedeutet ist, sowie integrierte Stege S, die sich vom Hauptträger H nach unten erstrecken und mit den Halterungen 3 verbunden werden.

Der Hauptträger H erstreckt sich im Wesentlichen über die Breite des Modulträgers M und besitzt eine obere Hauptträgerbreitseite 6 sowie eine untere Hauptträgerbreitseite 7 und vordere und hintere Ränder 8. Der Hauptträger H, wie auch die Stege S, sind hier nur der Einfachheit halber gerade und eben dargestellt, sie können jedoch beliebige, von der Darstellung abweichende Formen haben. Die Stege S zweigen in Abzweiganschlüssen 9 vom Hauptträger H ab und besitzen Stegbreitseiten 15, 17 und Ränder 16. Gestrichelt ist femer eine Lasche L angedeutet, die integral mit dem Hauptträger H verbunden ist, und sich vom Rand 8 oder über den Rand hinweg nach unten zum Querprofil 1 erstreckt. Auch die Lasche L enthält zumindest eine Endlosfasergewebeschicht in einer Kunststoffmatrix (Faserverbundkunststoff mit Endlosfasern).

Gestrichelt sind ferner verschiedene sogenannte Montierbereiche 14 am Hauptträger H, an den Stegen S, und, falls vorhanden, an der Lasche L angedeutet. Hierbei handelt es sich beispielsweise um Rippen, erhabene Bereiche, Flansche, Lagerböcke und dgl. Dort werden Zubehörteile oder Module montiert. Diese Montierbereiche 14 sind jeweils den Anforderungen entsprechend ausgeformt, und zumindest teilweise, ebenfalls durch Endlosfasem der Endlosfasergewebeschichten armiert, allerdings in geringerer Konzentration als im Hauptträger H und den Stegen S. Die Montierbereiche 14 werden beispielsweise bereits bei der Herstellung des Teils T geformt.

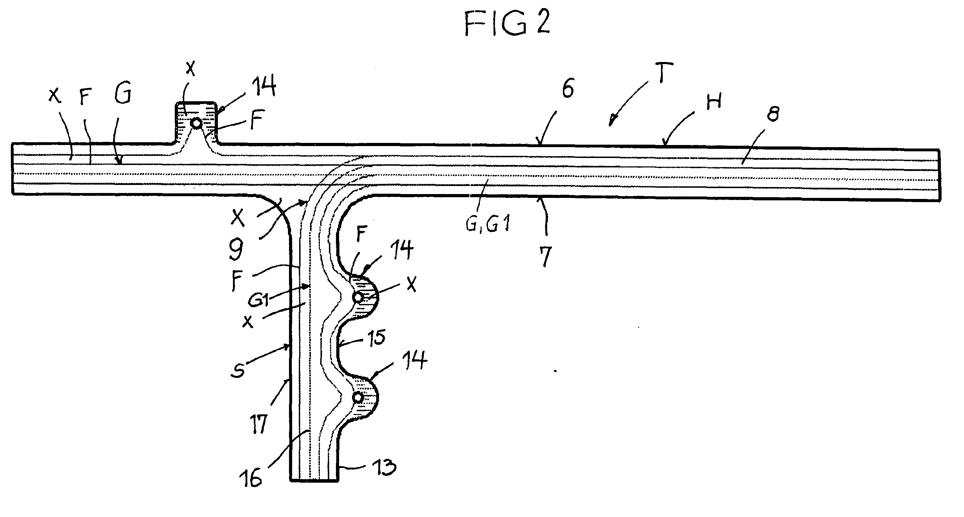

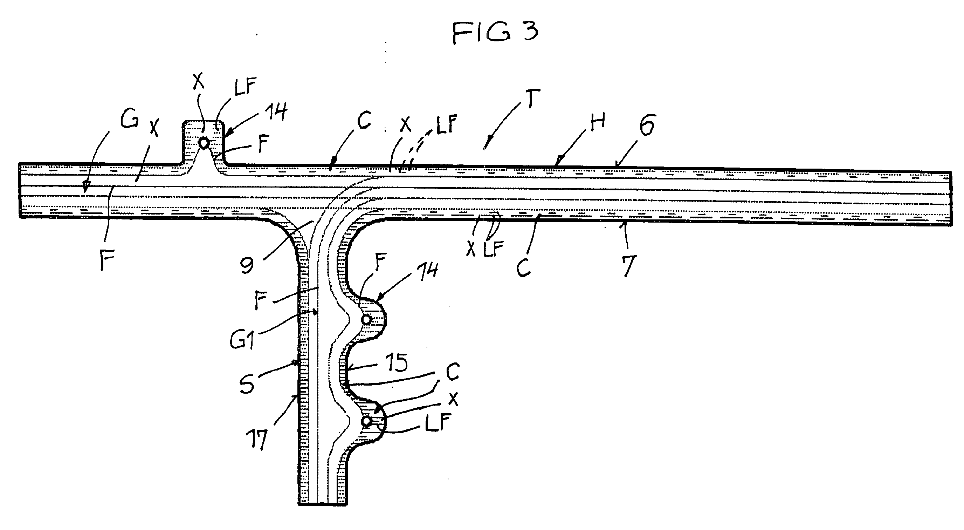

Der Detailaufbau des Teils T ist deutlicher aus den Fig. 2 und 3 zu entnehmen, die schematisch zwei verschiedene Ausführungsformen repräsentieren.

Zunächst ist anzumerken, dass jeder Steg S von einer Hauptträgerbreitseite 6, 7 und innerhalb der Ränder 8 unter einem spitzen Verschneidungswinkel mit der Hauptträgerbreitseite abzweigt. Im gezeigten Ausführungsbeispiel steht die Hauptebene des Stegs S in etwa senkrecht zur Hauptebene des Hauptträgers H, und verläuft der Abzweiganschluss 9 in etwa senkrecht zur Längsrichtung des Hauptträgers H quer über die Hauptträgerbreitseite 7. Der Steg S könnte jedoch auch in einer relativ verdrehten Lage angeformt und/oder schmaler als der Hauptträger H sein. Wesentlich ist, dass, den Bauanforderungen des Modulträgers M entsprechend der Steg S von einer Hauptträgerbreitseite ausgeht, im Unterschied zur Lasche L, die auch mit Endlosfasergewebeschichten leicht formbar in etwa parallel zum Rand 8 oder über diesen hinweg vom Hauptträger H abzweigt.

Im Hauptträger und im Steg ist jeweils mindestens eine Endlosfasergewebeschicht G, G1 in einer Kunststoffmatrix X enthalten, wobei die Faserrichtung der Endlosfasern F im Hauptträger in etwa dessen Längsrichtung entspricht. Im Hinblick auf eine stabile Verbindung ist die Endlosfaser-Gewebeschicht G1 des Stegs S über den Abzweiganschluss 9 in oder an eine Endlosfasergewebeschicht G des Hauptträgers übergeführt, derart, dass sie zumindest zum Teil wenigstens eine Hauptträgerbreitseite 6, 7 mit ausbildet. In den in Fig. 2 gezeigten Montierbereichen 14, die durch Pressformen und Verdrängen der Kunststoffmatrix X geformt sind, verlaufen ebenfalls Endlosfasern F, jedoch in einer Konzentration, die niedriger ist als im Hauptträger H bzw. im Steg S.

Der Teil T wird in einer Heißpressform gebildet, die entsprechende Formhohlräume für den Hauptträger H und jeden Steg S hat. Diese Formhohlräume stehen miteinander in Verbindung. Vor dem Pressvorgang werden die Endlosfaser-Gewebeschichten G für den Hauptträger H im Formhohlraum für den Hauptträger befinden, während sich die Endlosfaser-Gewebeschichten G1 für den Steg S im Formhohlraum für den Steg befinden, sich jedoch über die Verbindung der Formhohlräume bis in den Formhohlraum des Hauptträgers H erstrecken.

In Fig. 2 ist die zumindest eine Endlosfaser-Gewebeschicht G1 des Stegs S über den Abzweiganschluss 9 hinweg nur nach rechts in den Hauptträger H umgeschlagen. Alternativ könnte die Endlosfaser-Gewebeschicht G1 nach links umgeschlagen sein, bei mehreren Schichten G1 wenigstens eine nach links und wenigstens eine nach rechts.

Der in Fig. 3 gezeigte Teil T unterscheidet sich von der vorhergehenden Ausführungsform durch eine Faserverbundkunststoff-Hybridtechnik-Bauweise. Dies bedeutet, dass nicht nur Endlosfaser-Gewebeschichten G, G1 für den Hauptträger H und jeden Steg S verarbeitet sind, sondern auch langfaserverstärkter Faserverbundkunststoff C, der zwar wegen der Langfasern LF nicht dieselbe Festigkeit und Steifigkeit erbringen kann, wie Endlosfaser-Gewebeschichten, jedoch wegen der Beweglichkeit der Langfasern LF relativ bequem fließverformbar ist.

In Fig. 3 ist langfaserverstärkter Faserverbundkunststoff C an den Hauptträgerbreitseiten 6, 7 (gegebenenfalls auch den Rändern 8) und den Stegbreitseiten 17, 15 (und gegebenenfalls den Rändern 16) vorgesehen. Gründe der Hybridtechnik-Bauweise sind die bessere Fließverformbarkeit des langfaserverstärkten Faserverbundkunststoffes C und eine optisch ansprechendere Oberflächengestaltung. Der Faserverbundkunststoff C bildet z.B. die sichtseitigen Oberflächen relativ glatt und homogen aus, und deckt die Endlosfaser-Gewebeschichten nach außen ab. Femer dient der Verbundkunststoff C dazu, die Montagebereiche 14 verfahrenstechnisch einfacher formen zu können. Ein Großteil der Kunststoffmatrix X des langfaserverstärkten Faserverbundkunststoffes C ist mit Langfasern LF unter dem Einfluss von Druck und Temperatur in die Montagebereiche 14 verdrängt, um diese auszuformen, wobei jedoch, vorzugsweise, in den Montagebereichen 14 zusätzlich zu den Langfaser LF auch Endlosfasern F vorliegen, jedoch in einer geringeren Konzentration als im Hauptträger H bzw. im Steg S.

Zur Pressformung des Teils T von Fig. 3 werden zunächst, analog zu Fig. 2, die Endlosfaser-Gewebeschichten G, G1 in den Formhohlräumen für den Hauptträger H und den Steg S platziert, wobei die Endlosfaser-Gewebeschichten G, G1 beispielsweise als Prepregs vorliegen, die an ihren Außenseiten bereits den langfaserverstärkten Faserverbundkunststoff C tragen. Beim Pressvorgang wird dann der Teil T geformt und verdichtet und zu einer innigen Bindung zwischen den Langfasern, den Endlosfasern und der Kunststoffmatrix gebracht, wobei gleichzeitig Material in die Montierbereiche 14 verlagert wird.

Alternativ kann der langfaserverstärkte Faserverbundkunststoff C auch in Form von Matten entweder in beiden Formhohlräume für den Hauptträger H und den Steg S oder nur in einem der Formhohlräume platziert und dann beim Pressvorgang durch Fließen in den anderen Formhohlraum verlagert werden, weil die Fließverformungseigenschaften dieses Faserverbundkunststoffes C relativ gut sind.

Als weitere Alternative könnte, nach dem die Endlosfaser-Gewebeschichten G, G1 in ihren jeweiligen Formhohlräumen platziert worden sind, vor oder nach dem Pressvorgang langfaserverstärkter Faserverbundkunststoff C in aufgeschmolzener Form eingespritzt werden, um die Sichtseiten abzudecken und die Montierbereiche 14 mit auszubilden.

Die in Fig. 1 gezeigte Lasche L kann entsprechend mitgeformt werden, wobei sie zumindest eine Endlosfaser-Gewebeschicht G enthält, deren Endlosfasern F sich zumindest zum Teil quer über eine Hauptträgerbreitseite 6, 7 erstrecken.

## Patentansprüche

1. Modulträger-Teil (T) aus Faserverbundkunststoff für einen Modulträger (M) eines PKW- oder LKW-Fahrzeugkörpers, wobei der Modulträger-Teil (T) einen langgestreckten Hauptträger (H) und wenigstens einen vom Hauptträger (H) aus wenigstens einer Hauptträgerbreitseite (6, 7) innerhalb der Hauptträgerbreiteseitenränder (8) unter einem spitzen Verschneidungswinkel mit der Hauptträgerbreitseite (6, 7) abzweigenden Steg (S) umfasst, **dadurch gekennzeichnet, dass** der Hauptträger (H) ein wenigstens eine Endlosfaser-Gewebeschicht (G) enthaltender Faserverbundkunststoff-Pressformteil ist, und dass der Steg (S) wenigstens eine Endlosfaser-Gewebeschicht (G1) enthält, die sich über den Abzweiganschluss (9) des Stegs (S) bis in die Hauptträgerbreitseite (6, 7) erstreckt und dort zumindest einen Teil der Hauptträgerbreitseite bildet.

2. Modulträger-Teil nach Anspruch 1, **dadurch gekennzeichnet, dass** der Hauptträger (H) mit dem Steg (S) in Faserverbundkunststoff-Hybridtechnik pressgeformt ist und zumindest an einem Teil wenigstens einer Hauptträgerbreitseite (6, 7) und/oder wenigstens einer Stegbreitseite (15, 17), gegebenenfalls einschließlich des Abzweiganschlusses (9), stoffschlüssig eingeformten langfaserverstärkten Faserverbundkunststoff (C) aufweist.

3. Modulträger-Teil nach Anspruch 1 oder 2, **dadurch gekennzeichnet, dass** am Hauptträger (H) und/oder am Steg (S) pressgeformte Montagebereiche (14) vorgesehen sind, und dass jeder Montagebereich (14) Endlosfasern (F) in einer niedrigeren Konzentration als im Hauptträger (H) und im Steg (S) enthält.

4. Modulträger-Teil nach Anspruch 2, **dadurch gekennzeichnet, dass** der langfaserverstärkte Faserverbundkunststoff (C) zumindest sichtseitige Oberflächen des Modulträger-Teils (T) voll abdeckt, und, vorzugsweise, in den Montagebereichen (14) erhabene Formstrukturen wie Flansche, Rippen, Blöcke oder dgl. Strukturelle ergänzt.

5. Modulträger-Teil nach wenigstens einem der Ansprüche 1 bis 4, **dadurch gekennzeichnet, dass** wenigstens eine Lasche (L) am Hauptträger (H) angeformt ist, die wenigstens eine Endlosfaser-Gewebeschicht (G) enthält und von einer Hauptträgerbreitseite (6, 7) am oder über den Hauptträgerbreitseitenrand (8) mit einem spitzen Verschneidungswinkel mit der Hauptträgerbreitseite (6, 7) abzweigt und deren Endlosfasem (F) über den Abzweiganschluss in den Hauptträger und zumindest in einen Teil der Hauptträgerbreitseite (6, 7) verlaufen.

6. Modulträger-Teil nach wenigstens einem der vorhergehenden Ansprüche, **dadurch gekennzeichnet, dass** der Hauptträger (H) und/oder der Steg (S) zumindest bereichsweise mehr als eine Endlosfasergewebeschicht (G) enthält.

7. Modulträger-Teil nach wenigstens einem der Ansprüche 1 bis 6, **dadurch gekennzeichnet, dass** der Modulträger-Teil (T) als Ergänzung eines rahmenartigen Mischbauweise-Frontend-Modulträgers (M) den bandartig über im Wesentlichen die gesamte Modulträgerbreite durchgehenden Hauptträger (H) mit endseitigen Anschlussstellen (12) für Seitenwangen (5) eines Modulträger-Unterteils (U) und zwei jeweils im Abstand von den Anschlussstellen (12) von der unteren Hauptträgerbreitseite (7) in etwa senkrecht abzweigenden, ebenfalls bandartigen Stegen (S) mit einer in etwa der maximalen Hauptträgerbreite entsprechenden Breite umfasst, an denen endseitige Anschlussstellen (13) für im Modulträger-Unterteil (U) vorgesehene Crash-Box-Halterungen (3) angeformt sind, und dass im Hauptträger (H) und in den Stegen (S) Endlosfaser-Gewebeschichten (G) enthalten sind.

8. Verfahren zum thermischen Pressformen eines aus einem Hauptträger und wenigstens einem von einer Hauptträgerbreitseite (6, 7) innerhalb der Hauptträgerbreiteseitenränder (8) unter einem spitzen Verschneidungswinkel mit der Hauptträgerbreitseite abzweigenden Steg (S) bestehenden Modulträger-Teils (T) aus Faserverbundkunststoff in einer kommunizierende Formhohlräume für den Hauptträger und den Steg aufweisenden Pressform, **dadurch gekennzeichnet, dass** vor dem Pressvorgang wenigstens eine mit Kunststoff imprägnierte Endlosfader-Gewebeschicht (G) im Formhohlraum für den Hauptträger (H) und wenigstens eine weitere mit Kunststoff imprägnierte Endlosfaser-Gewebeschicht (G1) zu einem Teil im Formhohlraum für den Hauptträger (H) und zu einem anderen Teil über den Abzweiganschluss zwischen den Formhohlräumen hinweg im Formhohlraum für den Steg (S) platziert werden.

9. Verfahren nach Anspruch 8, **dadurch gekennzeichnet, dass** zusätzlich im Formhohlraum für den Hauptträger (H) und/oder im Formhohlraum für den Steg (S) wenigstens eine Langfasern (LF) in einer Kunststoffmatrix (X) enthaltende Matte aus langfaserverstärktem Faserverbundkunststoff (C) platziert und beim Pressvorgang unter dem Einfluss von Temperatur und Druck zum Fließen in vorbestimmte Bereich innerhalb des jeweiligen Formhohlraumes gebracht wird, vorzugsweise zu Montagebereichen (14) und/oder als Abdeckung über die Hauptträger- und Stegbreitseiten (6, 7, 15, 17).

10. Verfahren nach Anspruch 8, **dadurch gekennzeichnet, dass** zumindest in den Formhohlraum für den Hauptträger (H) oder den Steg (S) wenigstens eine Langfasern in einer Kunststoffmatrix enthaltende Matte aus langfaserverstärkten Verbundkunststoff platziert und beim Pressvorgang unter dem Einfluss von Temperatur und Druck zum Fließen zu vorbestimmten Bereichen auch in dem jeweils anderen Formhohlraum gebracht wird.

11. Verfahren nach Anspruch 8, **dadurch gekennzeichnet, dass** zum Abdecken der Endlosfaser-Gewebeschichten (G) und/oder Ausformen von Montagebereichen (14) zusätzlich ein langfaserverstärkter Verbundkunststoff (C) in plastifizierter Form eingespritzt wird.

## Claims

1. Module support part (T) made from fibre reinforced plastic compound material, for a module support (M) of the car body of a passenger car or a lorry, the module support part (T) comprising a longitudinally extending main beam (H) and at least one web (S) branching off from the main beam (H) out of at least one broader side (6, 7) of the main beam within the side edges (8) of the broader side of the main beam and with an acute angle of intersection with the broader side (6, 7) of the main beam (H), **characterised in that** the main beam (H) is a pressed form part of fibre reinforced plastic compound material containing at least one fabric layer (G) of endless fibres, and that the web (S) contains at least one fabric layer (G1) of endless fibres which fabric layer extends from the web (S) over the branching-off connection (9) of the web (S) into the broader side (6, 7) of the main beam (H), the at least one fabric layer (G1) forming in the main beam at least a part of the broader side of the main beam.

2. Module support part according to claim 1, **characterised in that** the main beam (H) and the web (S) formed by pressing according to a hybrid pressing technology for fibre reinforced plastic compound material, and that the main beam (H) comprises at least at a part of at least one broader side (6, 7) of the main beam and/or at least one broader side (15, 17) of the web (S), optionally including the branching-off connection (9), fibre reinforced plastic compound material (C) which is material bonded and moulded and reinforced by long fibres.

3. Module support part according to claim 1 or 2, **characterised in that** mounting regions (14) are formed by pressing at the main beam (H) and/or at the web (S), and that each mounting region (14) contains endless fibres (F) in a lower concentration than the endless fibres concentration in the main beam (H) and in the web (S).

4. Module support part according to claim 2, **characterised in that** the fibre reinforced plastic compound material (C) being reinforced by long fibres fully covers at least surfaces of the module support part (T) which surfaces can be seen from the exterior, and, preferably, in the mounting regions (14) structurally completes protruding form structures like flanges, ribs, blocks or the like.

5. Module support part according to.at least one of claims 1 to 4, **characterised in that** at least one lug (L) is formed at the main beam (H), the lug (L) containing at least one fabric layer (G) of endless fibres, which fabric layer (G) branches off at or over the edge (8) of the broader side from one broader side (6, 7) of the main beam at an acute angle of intersection with the broader side (6, 7) of the main beam, the endless fibres (F) of which extend over the branching-off connection into the main beam and at least into a part of the broader side (6, 7) of the main beam.

6. Module support part according to at least one of the preceding claims, **characterised in that** the main beam (H) and/or the web (S) contains more than one fabric layer (G) of endless fibres, at least in a region thereof.

7. Module support part according to at least one of claims 1 to 6, **characterised in that** the module support part (T) comprises, as a completion of a frame-like front end module support (M) produced in mixed construction, the main beam (H) extending band-like along substantially the entire width of the module support, end side connection locations (12) for side cheeks (5) of a module support lower part (U), and two band-like webs (S) branching off distant from the connection locations (12) substantially perpendicular from the lower broader side (7) of the main beam, the webs (S) having a width substantially corresponding to the maximal width of the main beam, with connection locations (13) formed at the web ends for crush box holders (3) provided in the module support lower part (U), and that fabric layers (G) made of endless fibres are contained in the main beam (H) and in the webs (S).

8. Method for thermally press forming a module support part (T) from fibre reinforced plastic compound material in a press mould having communicating mould cavities for a main beam (H) and a web (S), the module support part (T) consisting of a main beam (H) and of at least one web (S) branching off at an acute angle of intersection with the broader side of the main beam from a broader side (6, 7) of the main beam within the side edges of the broader side of the main beam and, **characterised in that** prior to the pressing process at least one fabric layer (G) of endless fibres impregnated with plastic material is placed in the main beam (H) mould cavity and parts of at least one further fabric layer (G1) of endless fibres impregnated with plastic material extending over the branching-off connecting between the mould cavities are placed in both the mould beam (H) mould cavity and in the web (S) mould cavity.

9. Method according to claim 8, **characterised in that** at least one additional mat of long fibre reinforced fibre plastic compound material (C) containing long fibres (F) in a plastic material matrix (X) is placed in the main beam (H) mould cavity or in the web (S) mould cavity which mat during the pressing process under the influence of temperature and pressure is caused to flow into predetermined regions within the respective mould cavity, preferably, into mounting regions (14) and/or as a cover over the broader sides (6, 7, 15, 17) of the main beam and the web.

10. Method according to claim 8, **characterised in that** at least one mat of long fibre reinforced plastic compound material containing long fibres in a plastic material matrix is placed either in the main beam (H)e mould cavity or in the web (S) mould cavity, which mat during the pressing process under the influence of temperature and pressure is caused to flow to predetermined regions also in the respective other mould cavity.

11. Method according to claim 8, **characterised in that** for covering the fabric layers (G) of endless fibres and/or for forming mounting regions (14) additionally long fibre reinforced plastic compound material (C) is injected in plasticised condition.

## Revendications

1. Elément de support de module (T) en matière synthétique composite renforcée par des fibres pour un support de module (M) d'un corps de véhicule de tourisme ou de poids lourd, l'élément de support de module (T) comprenant un support principal oblong (H) et au moins une branche (S) qui part du support principal (H) à partir d'au moins un côté plat (6, 7) de celui-ci, à l'intérieur des bords de côtés plats (8), suivant un angle d'intersection aigu par rapport audit côté plat (6, 7),
**caractérisé en ce que** le support principal (H) est constitué par une pièce moulée par compression en matière synthétique composite renforcée par des fibres qui contient au moins une couche de tissu en filaments (G), et **en ce que** la branche (S) contient au moins une couche de tissu en filaments (G1) qui s'étend sur le raccordement (9) de la branche (S) jusqu'au côté plat (6, 7) du support principal, et forme à cet endroit une partie au moins dudit côté plat.

2. Elément de support de module selon la revendication 1, **caractérisé en ce que** le support principal (H) est moulé par compression avec la branche (S), suivant la technique hybride pour matières synthétiques composites renforcées par des fibres, et présente sur une partie au moins d'au moins un côté plat (6, 7) du support principal et/ou d'au moins un côté plat de branche (15, 17), y compris du raccordement (9), éventuellement, une matière synthétique composite renforcée par des filaments, intégrée d'une seule pièce.

3. Elément de support de module selon la revendication 1 ou 2, **caractérisé en ce qu'**il est prévu sur le support principal (H) et/ou sur la branche (S) des zones de montage (14) moulées par compression, et **en ce que** chaque zone de montage (14) contient des filaments (F) en concentration plus faible que dans le support principal (H) et dans la branche (S).

4. Elément de support de module selon la revendication 2, **caractérisé en ce que** la matière synthétique composite renforcée par des filaments (C) couvre entièrement au moins les faces visibles de l'élément de support de module (T), et complète de préférence des structures qui dépassent dans les zones de montage (14), telles que des brides, des nervures, des blocs ou autres.

5. Elément de support de module selon l'une au moins des revendications 1 à 4, **caractérisé en ce qu'**il est prévu, rapportée sur le support principal (H), au moins une attache (L) qui contient au moins une couche de tissu en filaments (G) et qui part d'un côté plat de support principal (6, 7) sur le bord de côté plat de support principal (8) ou par-dessus celui-ci, avec un angle d'intersection aigu par rapport audit côté plat (6, 7), et dont les filaments (F) s'étendent par l'intermédiaire du raccordement dans le support principal et au moins dans une partie du côté plat (6, 7) de celui-ci.

6. Elément de support de module selon l'une des revendications précédentes, **caractérisé en ce que** le support principal (H) et/ou la branche (S) contiennent au moins par zones plus d'une couche de tissu en filaments (G).

7. Elément de support de module selon l'une au moins des revendications 1 à 6, **caractérisé en ce qu'**il comprend, comme complément d'un support de module d'extrémité frontale à construction mixte en forme de cadre (M), le support principal (H) continu, en forme de bande, sur quasiment toute la largeur du support de module, avec des points de raccordement d'extrémité (12) pour les côtés (5) d'un élément inférieur de support de module (U), et deux branches (S) également en forme de bandes, qui partent du côté plat inférieur de support principal (7), à peu près perpendiculairement, à une certaine distance des raccordements (12), qui présentent une largeur correspondant à peu près à la largeur maximale du support principal, et sur lesquelles sont rapportés des raccordements d'extrémité (13) pour des fixations de crash box (3) prévues dans l'élément inférieur de support de module (U), et **en ce que** des couches de tissu en filaments (G) sont contenues dans le support principal (H) et dans les branches (S).

8. Procédé pour le moulage par compression thermique d'un élément de support de module (T) en matière synthétique composite renforcée par des fibres composé d'un support principal et d'au moins une branche (S) qui part d'un côté plat de support principal (6, 7), à l'intérieur des bords de côtés plats (8), suivant un angle d'intersection aigu par rapport au côté plat de support principal, dans un moule à compression comportant des empreintes qui communiquent pour le support principal et pour la branche,
**caractérisé en ce qu'**avant l'opération de compression, au moins une couche de tissu en filaments (G) imprégnée de matière synthétique est placée dans l'empreinte pour le support principal (H), et au moins une autre couche de tissu en filaments (G1) imprégnée de matière synthétique est placée en partie dans l'empreinte pour le support principal (H) et en partie dans l'empreinte pour la branche (S), par-dessus le raccordement, entre les empreintes.

9. Procédé selon la revendication 8, **caractérisé en ce qu'**en supplément, au moins un mat de matière synthétique composite renforcée par des filaments (C), qui contient des filaments (LF) dans une matrice de matière synthétique (X), est placé dans l'empreinte pour le support principal (H) et/ou dans l'empreinte pour la branche (S), et est amené à couler dans des zones prédéfinies de l'empreinte lors de la compression, sous l'influence de la température et de la pression, de préférence jusqu'à des zones de montage (14) et/ou pour former un recouvrement sur les côtés plats du support principal et de la branche (6, 7, 15, 17).

10. Procédé selon la revendication 8, **caractérisé en ce qu'**au moins un mat composé de matière synthétique composite renforcée par des filaments et contenant des filaments dans une matrice de matière synthétique est placé au moins dans l'empreinte pour le support principal (H) ou pour la branche (S), et, lors de la compression, sous l'influence de la température et de la pression, est amené à couler aussi dans l'autre empreinte jusqu'à des zones prédéfinies.

11. Procédé selon la revendication 8, **caractérisé en ce que** pour couvrir les couches de tissu en filaments (G) et/ou pour former des zones de montage (14), on injecte en supplément une matière synthétique renforcée par des filaments (C) sous une forme plastifiée.
